(19) Europäisches Patentamt
European Patent Office
Office européen des brevets

(11) **EP 3 105 366 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
*C23F 11/167* (2006.01)     *C23F 11/10* (2006.01)
*C23F 11/08* (2006.01)      *C23F 11/18* (2006.01)
*C23F 11/12* (2006.01)      *C02F 5/14* (2006.01)

(21) Anmeldenummer: **14808504.6**

(22) Anmeldetag: **02.12.2014**

(86) Internationale Anmeldenummer:
**PCT/EP2014/003210**

(87) Internationale Veröffentlichungsnummer:
**WO 2015/120871 (20.08.2015 Gazette 2015/33)**

(54) **VERWENDUNG VON PHOSPHOWEINSÄURE UND DEREN SALZEN ZUR BEHANDLUNG VON WASSER IN WASSERFÜHRENDEN SYSTEMEN**

USE OF PHOSPHO-TARTARIC ACID AND THE SALTS THEREOF FOR THE TREATMENT OF WATER IN WATER-CONDUCTING SYSTEMS

UTILISATION D'ACIDE PHOSPHOTARTRIQUE ET DE SES SELS POUR TRAITER L'EAU DANS DES SYSTÈMES À CIRCULATION D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2014 DE 102014001931**

(43) Veröffentlichungstag der Anmeldung:
**21.12.2016 Patentblatt 2016/51**

(73) Patentinhaber: **Kurita Water Industries Ltd. Tokyo 164-0001 (JP)**

(72) Erfinder:
• **HATER, Wolfgang**
  **41564 Kaarst (DE)**
• **LUNKENHEIMER, Rudolf**
  **55263 Wackernheim (DE)**
• **WOLF, Florian**
  **64646 Heppenheim (DE)**

(74) Vertreter: **Reitstötter Kinzebach Patentanwälte Im Zollhof 1 67061 Ludwigshafen (DE)**

(56) Entgegenhaltungen:
**EP-A1- 0 369 584     GB-A- 2 112 370**
**US-A- 4 120 655**

• **FEODOR LYNEN ET AL:**
**"Phosphor-d(+)-weinsäure", CHEMISCHE BERICHTE, Bd. 85, Nr. 9-10, 14. Oktober 1952 (1952-10-14), Seiten 905-912, XP055166822, ISSN: 0009-2940, DOI: 10.1002/cber.19520850913 in der Anmeldung erwähnt**

**Beschreibung**

Verwendung von Phosphoweinsäure und deren Salzen zur Behandlung von Wasser in wasserführenden Systemen.

HINTERGRUND DER ERFINDUNG

Die vorliegende Erfindung betrifft die Verwendung von Phosphoweinsäure und deren Salzen zur Behandlung von Wasser in wasserführenden Systemen.

STAND DER TECHNIK

Im Stand der Technik ist die Verwendung von Additiven zur Behandlung von Wasser in wasserführenden Systemen bekannt. Beispiele für wasserführende Systeme sind Wärmetauscher, Klimaanlagen, Kühlsysteme, Kühlturmanlagen, Verdampfungsanlagen, Heizungsanlagen, Prozesswassersysteme, Abwasseranlagen und Membrananlagen. In den wasserführenden Systemen stellen oftmals die Korrosion von Bauteilen bzw. Anlagenbestandteilen und die Belagsbildung an Oberflächen von Bauteilen bzw. Anlagenbestandteilen Probleme dar. Die Auslöser dieser Probleme gehen überwiegend von der Zusammensetzung, den Inhaltsstoffen bzw. den Bestandteilen des Wassers aus. Entsprechend werden in wasserführenden Systemen zur Korrosionsinhibierung und Scaleinhibierung Additive eingesetzt. Die Behandlung von Wasser in wasserführenden Systemen, insbesondere die Behandlung von Kühlwasser ist im Stand der Technik bekannt und beispielsweise in der Literatur beschrieben bei Colin Frayne: Cooling Water Treatment, Chemical Publishing Co., New York 1999; Marie J. Alton: Chemical Treatment for cooling water, The Fairmont Press, Lilburn 1998; H.-D. Held, H., G. Schnell (bearbeit.): Kühlwasser, Vulkan-Verlag, Essen 1994; G. Schmitt (Hrsg.): Korrosion in Kühlkreisläufen, Verlag Irene Kuron, Bonn 1990; H.,G. Schnell, W.-D. Schnell: Kühlwasser, Vulkan-Verlag, Essen 2012. Zur Korrosionsinhibierung werden im Stand der Technik hierzu beispielsweise Sauerstoffbindemittel, zum Beispiel Hydrazin, eingesetzt, welches den in Wasser bzw. Nassdampf vorhandenen Sauerstoff bindet und somit die Korrosion an Metalloberflächen, wie beispielsweise in metallischen Rohrleitungen verhindert. Von Nachteil ist hierbei insbesondere die Toxizität von Hydrazin. Weitere Beispiele für Korrosionsinhibitoren sind Phosphate, Phosphonate und Schwermetalle, wie Zink, Molybdate, Wolframate und Chromate. Nachteil weiterer im Stand der Technik bekannter Korrosionsinhibitoren ist ihre zumeist selektive Wirkung, d.h., die bekannten Korrosionsinhibitoren zeigen eine gute Korrosionswirkung selektiv nur bei einem Metall oder Legierungstyp. Beispielsweise wirken bestimmte Korrosionsinhibitoren entweder bei ferritischen Stählen und Legierungen oder bei Buntmetallen. US-A-4 120 655 offenbart Korrosionsschutzverfahren für Eisenmetalle in Kühlwasser insbesondere Meereswasser. Eine korrosionsinhibierende Mischung aus einem Metallsalz einer Hydroxycarbonsäure und einem Phosphatester eines Alkanolamins wird eingesetzt. Ein weiteres Problem in wasserführenden Systemen ist das Scaling, Scale-up und/oder Fouling. Hierunter versteht man eine unerwünschte Ablagerung, Belagsbildung an und/oder Verkrustung auf Oberflächen wasserführender Systeme insbesondere an Grenzflächen mit Wärmeübergangskoeffizienten, wie beispielsweise auf metallischen Oberflächen. Diese Ablagerungen und Beläge beeinträchtigen die Funktion der wasserführenden Systeme. Hierbei ist insbesondere die Verminderung von Durchsätzen in wasserführenden Systemen bedingt durch (teilweise) Verstopfung von Rohrleitungen, der verringerte Wärme-/Kühlübertrag, lokale Überhitzung von Anlagenbestandteilen als auch vermehrte Produktionsausfälle durch erforderliche Reinigungsstillstände anzuführen.

Im Stand der Technik werden beispielsweise aus Kosten-, verfahrenstechnischen und/oder energetischen Überlegungen wasserführende Systeme überwiegend in Kreisläufen gefahren, was häufig zu einer Aufkonzentration von belagsbildenden Bestandteilen, wie schwerlösliche Salzen, wie beispielsweise Erdalkalimetallcarbonaten, -hydrogencarbonaten, -sulfaten, -phosphaten, wie Magnesiumcarbonat, Magnesiumhydrogencarbonat, Calciumcarbonat, Calciumhydrogencarbonat, Magnesiumphosphat, Mangansalzen, die zur Ablagerung von Braunstein oder Mn(III/IV)oxid/hydriden oder Carbonaten führen, Silikaten sowie diverse Hydroxiden wie Aluminiumhydroxid, Eisenhydroxid, Manganhydroxid und Magnesiumhydroxid führt, falls keine Ausschleusung von Bestandteilen aus dem wasserführendem System und/oder Regelung der Löslichkeitsgleichgewichtsbedingungen in dem wasserführenden System erfolgt. Zudem kann die Konzentration dieser Bestandteile in wasserführenden Systemen auch durch Verdampfungsvorgänge, insbesondere bei hohen Prozesstemperaturen erfolgen. Bewegt sich beispielsweise bei Salzen die Konzentration über den Sättigungspunkt, so kann es zu einer Ausfällung von Salzkristallen kommen, welche wiederum unerwünschte Ablagerungen bilden können.

Zudem kann die Sedimentation von ungelösten Feststoffen, die durch das Wasser in das wasserführende System eingetragen werden, im wasserführenden System zur Belagsbildung führen.

Ein weiteres Beispiel für Fouling kann eine Ansiedlung von bakteriellen Plaques und/oder Algen sein, was auch als biologisches Fouling bezeichnet wird. Als begrenzende Faktoren für Aufkonzentrationen in wasserführenden Systemen treten sowohl die Bestandteile, welche Inkrustierungen und Ablagerungen auslösen können, als auch korrosionsauslösende/korrosionsverstärkende Bestandteile auf.

Die Belagsbildung und Korrosion in wasserführenden Systemen wird von einer Vielzahl von Parametern beeinflusst, wie beispielsweise der Sauerstoffkonzentration, dem Elektrolytgehalt, dem pH-Wert, der Temperatur, der Strömungsgeschwindigkeit des Mediums, etc. in wasserführenden Systemen.

In diesem Zusammenhang sind die in wasserführenden Systemen vorhandene Carbonathärte (ablagerungsbildend) und der in wasserführenden Systemen vorhandene Chloridgehalt (Auslösung/Verstärkung von Korrosionsvorgängen) zu nennen. Oft werden auch die Konzentrationen beispielsweise von Magnesium- und Calciumionen getrennt bestimmt und dann als Magnesiumhärte bzw. Calciumhärte bezeichnet. Dem Fachmann sind chemische Wasserbehandlungsmethoden zur Kontrolle des Carbonat- und Chloridgehaltes bekannt. Beispielsweise lassen sich Carbonat- und Chloridgehalte durch Ionenaustauscher reduzieren. Auch lässt sich durch ablagerungshemmende Verbindungen die Bildung von schwerlöslichen Niederschlägen aus Carbonationen und mehrwertigen Kationen, wie Magnesium- oder Calciumionen unterdrücken. Allgemein können chemische Fouling- oder Scale-Inhibitoren unerwünschte Ablagerungen in wasserführenden Systemen reduzieren beispielsweise durch Stören der Kristallisation oder auch Störung der Anlagerungs- oder Konsolidierungsstufen von Fouling-Prozessen.

Beispiele für Scale-Inhibitoren in wasserführenden Systemen sind Chelatbildner, wie beispielsweise EDTA, langkettige aliphatische Amine, beispielsweise Octadecylamin oder Polyamine, wie beispielsweise Oleyldipropylentriamin und andere filmbildende Amine, organische Phosphonsäuren, wie beispielsweise HEDP (1-Hydroxyethan-(1,1-diphosphonsäure)) oder Polyelektrolyte, wie beispielsweise Polyacrylsäure, Polymethacrylsäure oder Copolymere aus Acrylsäure und Maleinsäure mit niedrigen Molekulargewichten. Nachdem Carbonat- und Chloridgehalte in wasserführenden Systemen unter Kontrolle sind treten oft andere Inhaltsstoffe des Wassers in den Fokus der chemischen Behandlung wasserführender Systeme, die sich mit den bekannten Verbindungen nur unzureichend kontrollieren lassen. Sulfate, Phosphate, Fluoride, Oxalate, und vor allem auch Silikate können je nach technischer Ausführung der wasserführenden Systeme der Auslöser für Probleme sein.

Ein Nachteil von den im Stand der Technik bekannten Verwendungen von Korrosionsinhibitoren und Scaleinhibitoren ist, dass diese Additive überwiegend erfolgreich entweder nur zur Korrosionsinhibierung oder nur zur Scaleinhibierung in wasserführenden Systemen eingesetzt werden können. Eine Ausnahme bildet hier die Verwendung von Phosphaten und Phosphonaten, welche zwar als Korrosionsinhibitor und Belagsverhinderer wirken, aber zusätzlich nachfolgend genannte Nachteile haben. Phosphate, Oligophosphate und Polyphosphate bilden nach der Hydrolyse in hartem Wasser Calciumphosphat-Beläge aus und viele Phosphonate sind biologisch nur schwer abbaubar.

Es bestand also ein dringender Bedarf, Additive zur Inhibierung von Korrosion und Scale in wasserführenden Systemen zur Verfügung zu stellen, welche sowohl korrosionsinhibierend sind als auch effektiv die Bildung von Ablagerungen verhindern oder reduzieren. Die Korrosionsinhibierung sollte zudem unselektiv sein, d.h. nicht auf bestimmte Metallarten beschränkt sein. Zudem sollten die Additive auch gut biologisch abbaubar sein.

Der vorliegenden Erfindung liegt daher die Aufgabe zugrunde, Additive zur Behandlung von Wasser in wasserführenden Systemen bereitzustellen, welche die zuvor genannten Nachteile nicht aufweisen und welche gleichzeitig zumindest eine zufriedenstellende korrosionsinhibierende und eine zufriedenstellende scaleinhibierende Wirkung aufweisen. Des Weiteren soll auch die Verwendung dieser Additive zur Behandlung von Wasser mit hohen Chloridgehalten möglich sein.

Zudem soll die korrosionsinhibierende Wirkung der Additive zur Behandlung von Wasser in wasserführenden Systemen nicht auf ausgewählte Metallverbindungen beschränkt sein. Insbesondere sollen diese Additive eine verbesserte biologische Abbaubarkeit aufweisen und zudem kombinierbar mit anderen Scale- und/oder Korrosionsinhibitoren und/oder Biodispergatoren und/oder Dispergiermitteln und/oder Bioziden sein.

Zudem sollen die erfindungsgemäßen Additive über einen langen Zeitraum verarbeitbar und stabil sein, insbesondere eine verbesserte Chlorstabilität aufweisen.

## ZUSAMMENFASSUNG DER ERFINDUNG

Überraschender Weise wurde nun gefunden, dass diese Aufgabe durch Phosphoweinsäure und/oder deren Salze gelöst wird. Vorteilhaft ist die Wirkungskombination einer Korrosionsinhibierung mit einer Scaleinhibierung. Zudem ist die korrosionsinhibierende Wirkung bei der erfindungsgemäßen Verwendung von Phosphoweinsäure und/oder deren Salze nicht überwiegend selektiv und somit nicht auf ausgewählte Metallverbindungen beschränkt und zeigt eine gute biologische Abbaubarkeit. Des Weiteren zeigt die erfindungsgemäße Verwendung von Phosphoweinsäure und/oder deren Salze in der Kombination mit weiteren Bestandteilen, wie beispielsweise ausgewählt unter aliphatischen Di-, Tri- und Oligocarbonsäuren, die bis zu 6 Carbonsäuregruppen enthalten, aliphatischen Monocarbonsäuren, die wenigstens eine Hydroxylgruppe aufweisen, Aminosäuren, deren Salze und deren Gemische, anorganischen Polyphosphorsäure, Metapolyphosphorsäure und wasserlöslichen organischen Phosphonaten und deren Salze eine synergistische Wirkung, insbesondere bei der Korrosionsinhibierung.

Gegenstand der Erfindung ist daher die Verwendung von Phosphoweinsäure und/oder deren Salze zur Behandlung von Wasser in wasserführenden Systemen.

Ein weiterer Gegenstand der Erfindung ist eine Zusammensetzung umfassend Phosphoweinsäure und/oder deren Salze und eine oder mehrere Hydroxycarbonsäure(n) und/oder deren Salze.

DETALIERTE BESCHREIBUNG DER ERINDUNG

Im Rahmen der vorliegenden Erfindung werden unter wasserführenden Systemen technische Systeme, in welchen überwiegend Wasser als Medium geführt wird, verstanden. Beispiele für wasserführende Systeme sind Wärmetauscher, Klimaanlagen, Kühlsysteme, Kühlturmanlagen, Verdampfungsanlagen, Heizungsanlagen, Prozesswassersysteme, Abwasseranlagen und Membrananlagen. In den wasserführenden Systemen eingesetzte Metalle sind beispielsweise unlegierter oder niedrig legierter Stahl, Edelstahl, Kupfer und Kupferlegierungen, Aluminium und Aluminiumlegierungen, verzinkter Stahl, Kombinationen hiervon.

Im Rahmen der vorliegenden Erfindung wird unter Behandlung von Wasser die Einflussnahme auf Parameter in und/oder von wasserführenden Systemen verstanden. Beispiele für diese Parameter sind pH-Wert, Temperatur, Leitfähigkeit, gelöster Gasgehalt, freier Gasgehalt, Wasserhärte, Ionenkonzentrationen, Anteil von härtebildenden Bestandteilen, sowie die Zusammensetzung des Wassers, dessen Bestandteile, Gase, Kristallisationsformen, Ablagerungen, Bewuchs, etc. Beispielsweise kann es auch Wasser in Kühlwassersystemen sein, welche von Oberflächen, Grundwasser, Brackwasser oder Meerwasser gespeist werden, welches beispielsweise durch Filtration, Enthärtung oder Entsalzung mit oder ohne Rückverschneiden vorbehandelt werden kann. Der pH-Wert liegt üblicherweise im Bereich von 6 bis 10, die Leitfähigkeit kann zwischen wenigen $\mu$S/cm im Falle von entsalztem Wasser und bis zu 200000 $\mu$S/cm im Falle von Meerwasser liegen. Die Calciumhärte beträgt in der Regel zwischen 0 mg/L bis zu 3000 mg/L. Die Wassertemperaturen betragen in der Regel zwischen 10 °C und 50 °C im Falle von Heißwasseranlagen bis 150 °C.

Die erfindungsgemäße Verwendung von Phosphoweinsäure und/oder deren Salze zur Behandlung von Wasser in wasserführenden Systemen weist die folgenden Vorteile auf:

- Eine Wirkungskombination einer Korrosionsinhibierung mit einer Scaleinhibierung,
- Keine Wirkungsbeschränkung nur auf ausgewählte Metallverbindungen,
- Eine gute biologische Abbaubarkeit,
- Gute Kombinationsmöglichkeiten mit anderen Additiven, wie beispielsweise mit Dispergatoren, insbesondere Biodispergatoren, Bioziden, Korrosionsinhibitoren, Scaleinhibitoren,
- Synergetische Effekte insbesondere bei der Korrosionsinhibierung bei kombinierter Anwendung der erfindungsgemäßen Verwendung mit weiteren Bestandteilen, wie beispielsweise weiteren Korrosionsinhibitoren. Beispielsweise spricht man beim Zusammenwirken von Chemikalien von synergetischen bzw. synergistischen Effekten, wenn sich die kombinierten Wirkungen potenzieren,
- Eine Einstellmöglichkeit von Phosphoweinsäure und/oder deren Salze als wässrige Lösung und/oder Dispersion in einem breiten pH-Bereich von sauer bis alkalisch,
- Eine gute Stabilität gegenüber oxidierenden Bioziden, wie beispielsweise Natriumhypochlorit, in wasserführenden Systemen,
- Einfache Überwachung mit bekannten Analyseverfahren.

Gemäß einer bevorzugten Ausführungsform wird Phosphoweinsäure in wasserführenden Systemen in einer Menge von 0,1 bis 10000 mg, vorzugsweise von 0,2 bis 1000 mg, besonders bevorzugt von 0,3 bis 300 mg bezogen auf einen Liter des wasserführenden Systems zugesetzt.

Gemäß einer bevorzugten Ausführungsform weist das Wasser der wasserführenden Systeme eine Leitfähigkeit im Bereich von 1 bis 200000 $\mu$S/cm vorzugsweise im Bereich von 5 bis 2000 $\mu$S/cm, besonders bevorzugt im Bereich von 10 bis 5000 $\mu$S/cm auf.

Gemäß einer bevorzugten Ausführungsform wird die Phosphoweinsäure und/oder deren Salze in wasserführenden Systemen mit einer Calciumhärte im Bereich von 0 bis 30 Mol, vorzugsweise im Bereich von 0,1 bis 20 Mol, besonders bevorzugt im Bereich von 0,5 bis 15 Mol, bezogen auf einem Kubikmeter Flüssigkeit des wasserführenden Systems eingesetzt.

Im Rahmen der vorliegenden Erfindung wird unter Calciumhärte die Konzentrationen von Calciumionen in wasserführenden Systemen bezogen auf einem Kubikmeter Flüssigkeit des wasserführenden Systems, gemessen nach DIN 38406-3, Ausgabe 03, 2002, verstanden.

Gemäß einer bevorzugten Ausführungsform werden die Phosphoweinsäure und/oder deren Salze in Form eines oder mehrerer Alkalimetallsalze und/oder eines oder mehrerer Ammoniumsalze verwendet.

Gemäß einer bevorzugten Ausführungsform werden die Phosphoweinsäure und/oder deren Salze als Korrosionsinhibitor verwendet. Im Rahmen der vorliegenden Erfindung wird unter Korrosionsinhibitor ein Inhibitor verstanden, welcher dem wasserführenden System, wie beispielsweise einem Wasserkreislauf zugesetzt wird, damit die unerwünschte Reaktion einer Korrosion verhindert wird.

Gemäß einer bevorzugten Ausführungsform werden die Phosphoweinsäure und/oder deren Salze als Scaleinhibitor verwendet. Im Rahmen der vorliegenden Erfindung wird unter Scaleinhibitor ein Inhibitor verstanden, welcher dem wasserführenden System, wie beispielsweise einem Wasserkreislauf zugesetzt wird, damit die unerwünschten Reaktionen von Scaling, Scale-up und/oder Fouling, d.h. von unerwünschten Anlagerung, Ablagerungen, Belagsbildungen und/oder Verkrustung von Bestandteilen aus wasserführenden Systemen an Oberflächen, insbesondere an Grenzflächen mit Wärmeübergangskoeffizienten, wie beispielsweise metallischen Oberflächen in wasserführenden Systemen, welche die Funktion der wasserführenden Systeme beeinträchtigen, verhindert werden. Weitere Beispiele für die Beeinträchtigung der Funktion von wasserführenden Systemen ist die Verminderung von Durchsätzen in wasserführenden Systemen bedingt durch (teilweise) Verstopfung von Rohrleitungen, der verringerte Wärme-/Kühlübertrag, lokale Überhitzung von Anlagenbestandteilen als auch vermehrte Produktionsausfälle durch erforderliche Reinigungsstillstände anzuführen.

Im Rahmen der vorliegenden Erfindung werden unter Inhibitoren Hemmstoffe verstanden, die eine oder mehrere Reaktionen chemischer, biologischer oder physikalischer Natur so beeinflussen, dass diese verlangsamt, gehemmt oder verhindert werden. Beispiele für diese Reaktionen sind Korrosion, Scaling, Scale-up, Fouling.

Gemäß einer bevorzugten Ausführungsform wird die Phosphoweinsäure und/oder deren Salze als Bestandteil a) gemeinsam mit wenigstens einem weiteren Bestandteil b) und/oder c) einsetzt, wobei Bestandteil b) ausgewählt ist unter aliphatischen Di-, Tri- und Oligocarbonsäuren, die bis zu 6 Carbonsäuregruppen enthalten, aliphatischen Monocarbonsäuren, die wenigstens eine Hydroxylgruppe aufweisen, Aminosäuren, deren Salze und deren Gemische, und Bestandteil c) ausgewählt ist unter anorganischen Polyphosphorsäure, Metapolyphosphorsäure und deren Salze und wasserlöslichen organischen Phosphonsäuren und deren Salzen und deren Gemische.

Im Rahmen der vorliegenden Erfindung werden unter b1) aliphatische Di-, Tri- und Oligocarbonsäuren, die bis zu 6 Carbonsäuregruppen enthalten , insbesondere solche, die wenigstens eine Hydroxylgruppe aufweisen, insbesondere Weinsäure, Äpfelsäure, Gluconsäure, Zitronensäure, Iso-Zitronensäure, Tartronsäure, Alkandisäuren mit der Formel $COOH\text{-}(CH_2)_n\text{-}COOH$, wobei n im Bereich von 1 bis 14 ist, insbesondere Oxalsäure, Malonsäure,, Bersteinsäure, Fumarsäure, Maleinsäure, Butantetracarbonsäure, Cyclohexanhexacarbonsäure, deren Salze, Kombinationen hiervon verstanden.

Im Rahmen der vorliegenden Erfindung wird unter b2) aliphatische Monocarbonsäuren, die wenigstens eine Hydroxylgruppe aufweisen, insbesondere Milchsäure, Glykolsäure, Mandelsäure, Gallussäure, Salicylsäure, Hydroxibenzoesäure, Mevalonsäure, deren Salze, Kombinationen hier von verstanden.

Im Rahmen der vorliegenden Erfindung werden unter b3) Aminosäuren und deren Salze, insbesondere Ethylendiamintetraessigsäure, Iminodibernsteinsäure, Alanin, Glycin, Isoleucin, Leucin, Methionin, Prolin, Valin, Asparagin, Glutamin, Serin, Threonin, Tyrosin, Lysin, Arginin, Histidin, Asparaginsäure, Glutaminsäure, deren Salze, Kombinationen hiervon, verstanden.

Im Rahmen der vorliegenden Erfindung werden unter c1) Polyphosphorsäure, Metapolyphosphorsäure und/oder deren Salze, insbesondere Natrium-, Kalium-, Ammonium-, und saure Salze, beispielsweise Natriumphosphat, Kaliumphosphat, Ammoniumphosphat, Natriumdihydrogenphosphat, Kaliumdihydrogenphosphat, Dinatriumhydrogenphosphat, Dikaliumhydrogenphosphat, Tetranatriumdiphosphat, Tetrakaliumdiphosphat, Tetraammoniumdiphosphat, Natriumtriphosphat, Kaliumtriphosphat, Ammoniumtriphosphat, Natriumhexametaphosphat, Kaliumhexametaphosphat, Ammoniumhexametaphosphat, Natriumpolyphosphat, Kaliumhexapolyphosphat, Ammoniumpolyphosphat, Dinatriumdihydrogendiphosphat, Trinatriumhydrogendiphosphat, Natriumtrihydrogendiphosphat, Dikaliumdihydrogendiphosphat, Kaliumtrihydrogendiphosphat, Trikaliumhydrogendiphosphat , Kombinationen hiervon, verstanden.

Im Rahmen der vorliegenden Erfindung werden unter c2) organische Phosphonsäuren, insbesondere Hydroxyethandiphosphonsäure, Hydroxiphosphonessigsäure, Aminomethylentriphosphonsäure, Phosphonobutantricarbonsäure, Hexamethylendiamintetramethylenphosphonsäure, Diethylentriaminpentamethylenphosphonsäure, Ethylendiamintetramethylenphosphonsäure, Hydroxyethyl-aminodimethylenphosphonsäure, Bishexamethylentriaminpentamethylenphosphonsäure, Phosphonoligocarbonsäure, deren Salze, Kombinationen hiervon, , verstanden.

Gemäß einer bevorzugten Ausführungsform umfasst die Zusammensetzung den Bestandteil b) und ist das Gewichtsverhältnis von dem Bestandteil a) zu dem Bestandteil b), jeweils gerechnet als Reinstoff im Bereich von 1:20 bis 20:1, bevorzugt im Bereich von 1:10 bis 10:1.

Gemäß einer bevorzugten Ausführungsform ist der Bestandteil b) ausgewählt unter den Bestandteilen b1) und b2) und insbesondere Weinsäure, Äpfelsäure, Milchsäure, Glykolsäure, Gluconsäure, Zitronensäure, Iso-Zitronensäure, Mandelsäure, Mevalonsäure, Tartronsäure, Hydroxialkansäure, Gallussäure, Salicylsäure, Hydroxibenzoesäure, Asparaginsäure, Alkandisäuren, ungesättigten Alkandisäuren, insbesondere Fumarsäure, Maleinsäure, Butantetracarbonsäure, Cyclohexanhexancarbonsäure, deren Salzen, Mischungen hiervon.

Gemäß einer bevorzugten Ausführungsform umfasst die erfindungsgemäße Verwendung Alkandisäuren, ausgewählt unter Alkandisäuren mit der Formel $COOH\text{-}(CH_2\text{-})_n\text{-}COOH$, wobei n im Bereich von 1 bis 14 ist.

Gemäß einer bevorzugten Ausführungsform umfasst die erfindungsgemäße Verwendung einen Bestandteil c), wobei der Bestandteil c) ausgewählt ist unter Polyphosphorsäure, Metapolyphosphorsäure und deren Salze, insbesondere Natrium-, Kalium-, Ammonium-Salzen und/oder sauren Salzen hiervon, organischen Phosphonsäuren, insbesondere Hydroxyethandiphosphonsäure, Hydroxiphosphonoessgsäure, Aminomethylentriphosphonsäure, Phosphonobutantricarborbonsäure, Hexamethylendiamintetramethylenphosphonsäure, Diethylentriaminpentamethylenphosphonsäure, Ethylendiamintetramethylenphosphonsäure, Hydroxyethyl-aminodimethylenphosphonsäure, Bishexamethylentriaminpentamethylenphosphonsäure, Phosphonoligocarbonsäure und deren Salze, Mischungen hiervon.

Gemäß einer bevorzugten Ausführungsform umfasst die erfindungsgemäße Verwendung Polyphosphorsäure, ausgewählt unter Polyphosphorsäuren mit der Formel $H_{n+2}P_nO_{3n+1}$, wobei n im Bereich von 1 bis 100, vorzugsweise im Bereich von 1 bis 10 ist.

Gemäß einer bevorzugten Ausführungsform umfasst die erfindungsgemäße Verwendung Metapolyphosphorsäure, ausgewählt unter Metapolyphosphorsäuren mit der Formel $H_nP_nO_{3n}$, wobei n im Bereich von 3 bis 100, vorzugsweise im Bereich von 3 bis 10 ist.

Gemäß einer bevorzugten Ausführungsform ist die Zusammensetzung eine wässrige Lösung oder Dispersion.

Gemäß einer bevorzugten Ausführungsform setzt man Phosphoweinsäure in Kombination mit Biodispergatoren ein.

Im Rahmen der vorliegenden Erfindung wird unter Biodispergator eine oberflächenaktive Substanz verstanden, die einen reinigenden Effekt auf organisch verschmutzten Oberflächen aufweist, beispielsweise von durch einen Biofilmbewuchs verunreinigten Oberflächen. Der Biodispergator selbst stellt in der Regel kein Biozid dar, kann aber in vorteilhafter Weise zusammen mit Bioziden eingesetzt werden. Beispiele für Biodispergatoren sind Polyalkylenglykole, Terpene, nichtionische Tenside, anionische Tenside, kationische Tenside, amphotere Tenside, Mischungen hiervon.

Gemäß einer bevorzugten Ausführungsform setzt man Phosphoweinsäure in Kombination mit Bioziden ein. Im Rahmen der vorliegenden Erfindung werden unter Bioziden Wirkstoffe, Zubereitungen und Zusammensetzungen verstanden, welche dazu bestimmt sind auf chemischem oder biologischem Wege Schadorganismen zu zerstören, abzuschrecken, unschädlich zu machen, Schädigungen durch sie zu verhindern oder sie in anderer Weise zu bekämpfen verstanden.

Beispielsweise werden in der Klimatechnik Biozide gegen Mikroorganismen dem Wasserkreislauf zugesetzt, damit eine Verkeimung eines Rückkühlwerks verhindert wird. Beispiele für Biozide sind oxidierende Biozide, beispielsweise Chlor, Hypochlorite, Hypobromite, Bromchlorid, Chlordioxid, Ozon, Wasserstoffperoxid, Perborate, Permanganate, perorganische Säuren, Di-und Trichlorisocyanurate, nichtoxidierende Biozide, beispielsweise Glutardialdehyd, quarternäre Ammonium- oder Phosphoniumverbindungen, polyquarternäre Ammoniumverbindungen, Isothiazol-Verbindungen, Kupferoder Silberverbindungen, Bronopol, Benzoate, Thiocarbamate, Azinen, 2,2-dibromo-2-cyanoacetamide, Halogenhydantoinen und Halogenamine, Mischungen hiervon ein.

Gemäß einer bevorzugten Ausführungsform umfasst die Verwendung auch die Kombination von Phosphoweinsäure mit einem oder mehreren Biodispergator(en) und/oder mit einem oder mehreren Biozid(en) und/oder weiteren Bestandteilen ausgewählt unter Korrosionsinhibitoren, Scaleinhibitoren, Dispergatoren.

FIGURENBESCHREIBUNG UND BEISPIELE

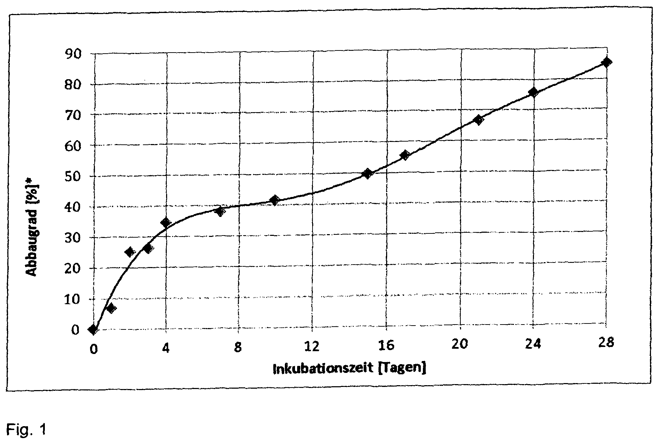

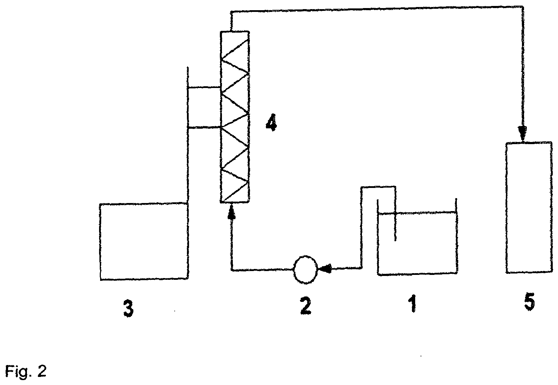

Die Erfindung wird nachstehend durch die Figuren 1 und 2 sowie die Beispiele 1 bis 5 näher erläutert.

Fig. 1   zeigt beispielhaft den Verlauf des biologischen Abbaus von Phosphoweinsäure (PWS) über einen Zeitraum von 28 Tagen nach der Prüfmethode OECD 302b,

Fig. 2   zeigt beispielhaft einen schematischen Versuchsaufbau zur Bestimmung der Wirkung einer Substanz als Calciumcarbonat Scaleinhibitor.

In der Figur 1 wird der Verlauf des biologischen Abbaus von Phosphoweinsäure (PWS) über einen Zeitraum von 28 Tagen nach der Prüfmethode OECD 302b gezeigt. Auf der x-Achse ist die Inkubationszeit in Tagen und auf der y-Achse der Abbaugrad in % angegeben. Die OECD-Richtlinie 302b beschreibt den modifizierten Zahl-Wellens Test. Hierbei wird die Probe in einem Zeitraum von 28 Tagen in Gegenwart von mineralischen Nährstoffen, Luft und Wärme einem mikrobiologisch aktiven Inokulum ausgesetzt. Die Bestimmung des Abbaugrades erfolgt durch Messung des gelösten organischen Kohlenstoffgehalts DOC (dissolved organic carbon) und dem Vergleich mit einer auf gleiche Weise behandelten probenfreien Kontrolllösung. Die Aktivität des Inokulums wird anhand einer Referenzmessung mit einem Standard (Diethylenglykol) überprüft. Eine Verfälschung des Messergebnisses durch die sog. spontane Eliminierung, welche durch die Adsorption (und dem damit verbundenen Entzug der Probe aus dem System) bedingt wird, wird hierbei durch Einhaltung einer Äquilibrationsperiode (ca. 210 min) vor Beginn der DOC-Messungen ausgeschlossen. Die Untersuchung der biologischen Abbaubarkeit wurde bei zwei verschiedenen Konzentrationen jeweils als Doppelbestimmung durchgeführt. In Figur 1 wurden die Mittelwerte der 4 parallel installierten Abbautests (2x200 mg/L, 2x350 mg/L) gegen die Abbauzeit geplottet. Die Berechnung des Abbaugrades anhand der ermittelten DOC-Werte erfolgte anhand von Formel 1. Der Abbaugrad der Diethylenglycol-Referenz überstieg nach 4 Tagen 90 %, was auf eine hinreichende Aktivität des Inokulums hindeutet. Der Abbaugrad wurde durch Messung des gelösten organischen Kohlenstoffanteils (DOC in mg/L) ermittelt und nach der nachfolgenden Formel 1 berechnet.

$$\text{Formel 1:} \quad \text{Abbaugrad in Prozent} = \left[ 1 - \frac{DOC^t_{Probe} - DOC^t_{Referenz}}{DOC^0_{Probe} - DOC^0_{Referenz}} \right] \times 100\%$$

$DOC^t_{Probe}$ = *gelöster organischer Kohlenstoff der Probe bei der Versuchsdauer t,*
$DOC^t_{Referenz}$ = *gelöster organischer Kohlenstoff der Referenzsubstanz bei der Versuchsdauer t,*
$DOC^0_{Probe}$ = *gelöster organischer Kohlenstoff der Probe bei Versuchsbeginn,*
$DOC^0_{Referenz}$ = *gelöster organischer Kohlenstoff der Referenzsubstanz bei Versuchsbeginn.*

Wird nach 10 Tagen einen Abbaugrad der Testsubstanz von ca. 70% erreicht, so gilt diese als leicht biologisch abbaubar. Das in diesem Beispiel untersuchte Phosphoweinsäuretetrakaliumsalz erzielt einen Abbaugrad von 70% erst nach einer Testzeitspanne von 20-24 Tagen. Damit ist das Phosphoweinsäuretetrakaliumsalz als inhärent biologisch abbaubar einzustufen und stellt somit einen attraktiven Kompromiss zwischen anwendungsfreundlicher Robustheit und Umweltverträglichkeit dar.

In der Figur 2 wird der Versuchsaufbau zur Bestimmung der Wirkung einer Substanz als Calciumcarbonat Scaleinhibitor dargestellt. In einem Becherglas 1 werden 2 Liter des Testwassers (Zusammensetzung siehe Tabelle 7) vorgelegt, mit der zu testenden Konzentration PWS versetzt und mittels einer Schlauchpumpe 2 mit einer Durchlaufgeschwindigkeit von 0,5 L/h über einen Zeitraum von zwei Stunden durch einen Glasrückflusskühler (Wärmetauscher 4) gepumpt und in einem Messzylinder 5 aufgefangen. Der Glasrückflusskühler wird mit Wasser beheizt, das mittels eines Thermostaten 3 auf einer Temperatur von 80 °C gehalten wird.

Für die nachfolgenden Beispiele ist die Herstellung von Phosphoweinsäure ist im Stand der Technik beispielsweise beschrieben bei 142. Feodor Lynen und Hans Bayer: Phosphor-d(+)-weinsäure, Aus dem Chemischen Universitäts-Laboratorium München, Biochemische Abteilung und dem Laboratorium der Fa. Gebr. Bayer, Augsburg, eingegangen am 2. April 1952, Nr. 9-10/1952, Chemische Berichte Jahrgang 1985, S. 905 - 912; C. Neuberg und W. Schuchardt: Über die Synthese der Phospho-d-weinsäure und ihre phosphatatische Spaltung, Aus dem Kaiser Wilhelm-Institut für Biochemie in Berlin-Dahlem, 28.III.36, S. 39 - 47.

In den nachfolgenden Beispielen wurde zur Herstellung der Phosphoweinsäure nach der Herstellvorschrift von Lynen und Bayer verfahren. Als Herstellvariante wurde die Umsetzung in Pyridin gewählt (F. Lynen, H. Bayer; Chemische Berichte 1952, 85, 905-912). Das anfallende Dibrucin-Salz der Phosphoweinsäure wurde gemäß der Aufarbeitung S. 910 der vorgenannten Herstellvorschrift über das Ammoniumsalz und danach abweichend von dieser Vorschrift über die Behandlung mit einem stark sauren Kationenaustauscherharz (Amberjet® 1200 Wasserstoff Form) in die freie Säure überführt. Die so angefallene, reine Phosphoweinsäure wurde mit Kalilauge zum Tetrakaliumsalz umgesetzt und bezogen auf das Tetrakaliumsalz eine 60% wässerige Lösung hergestellt.

Beispiel 1:

Korrosionsinhibierung von Stahl

In einem Becherglas werden 1 Liter des Testwassers (Zusammensetzung siehe Tabelle 1) vorgelegt, die zu testende Konzentration Phosphoweinsäure (PWS) (60%ige Lösung des Tetrakaliumsalzes) zugegeben und das Testwasser im Wasserbad auf 30 °C erwärmt. Drei Stahlcoupons (C 1010) werden an einem Halter befestigt und senkrecht mittels eines Rührmotors im Testwasser bei 100 Umdrehungen/Minute für eine Zeitdauer von 24 Stunden rotiert. Dabei sind die Coupons vollständig im Testwasser eingetaucht.

Tabelle 1: Zusammensetzung des Testwassers.

| arameter | Einheit | Wert |
|---|---|---|
| Calcium | Mol/m³ | 1,2 |
| Magnesium | Mol/m³ | 0,3 |
| Hydrogencarbonat | Mol/m³ | 1,9 |
| Sulfat | Mol/m³ | 0,4 |

(fortgesetzt)

| arameter | Einheit | Wert |
|----------|---------|------|
| Chlorid | Mol/m$^3$ | 1,7 |
| Natrium | Mol/m$^3$ | 2,2 |
| Nitrate pH | Mol/m$^3$ | 0,8 8,2 |

Die Coupons werden im Testwasser mittels einer Bürste von anhaftenden Eisenoxid/- hydroxid befreit und aus dem Testwasser genommen. Das Testwasser wird durch intensives Rühren homogenisiert, unter Rühren werden 50 ml entnommen und in einen Messkolben überführt. Durch Zugabe von konzentrierter Salzsäure werden die ungelösten Eisensalze aufgelöst und nach Auffüllen des Messkolbens mit vollentsalztem Wasser die Eisenkonzentration der Lösung mittels der Atomabsorptionsspektroskopie in Anlehnung an DIN 38 406 - E7 - 1 gemessen mit folgenden Abweichungen von der Norm:

2.1 Der Anwendungsbereich liegt bei zwischen 0,1 bis 5,0 mg/L.

2.2 Es wird mit einer Luft-Acetylen-Flamme gearbeitet. Die Extinktion wird bei einer Wellenlänge von 324,8 nm gemessen.

2.6 Die Salpetersäure/Cäsium-Lösung bestehend aus: 500 ml Salpetersäure Suprapur 500 ml VE-Wasser und 100 g Cäsiumchlorid p.a., Kupfer-Stammlösung, β(Cu) = 1000 mg/L, Kupfer-Bezugslösung; β(Cu) = 5 mg/L

-Die Bezugslösung beinhaltet auf 100 ml 1 ml der Salpetersäure/Cäsium - Lösung.
-Blindwertlösung/Nullwertlösung VE-Wasser ohne Salpetersäure.

2.7 Die zu untersuchenden Proben werden in Kunststoffbehälter gelagert. Die zu untersuchenden Proben werden direkt nach Probenahme mit der Salpetersäure/Cäsium - Lösung angesäuert. Auf 10 ml Probe werden 0,1 ml Säure-Lösung gegeben.

Aus der gemessenen Eisenkonzentration $C_{Fe,c}$ und der gemessenen Eisenkonzentration ohne Inhibitorzusatz (Blindwert) $C_{Fe,0}$ ergibt sich die relative Korrosions-Inhibierung für Stahl ($RKI_{Fe}$ [%]) gemäß nachfolgender Formel 2:

$$\text{Formel 2:} \quad RKI_{Fe} = (1 - C_{Fe,c} / C_{Fe,0}) \times 100\ \%.$$

In Tabelle 2 sind die gemessenen Eisenkonzentrationen und die relative Korrosions-Inhibierung für Stahl von PWS in Abhängigkeit von der Konzentration dargestellt. Bei einer Konzentration von 20 mg/L wird die Korrosion von Stahl um 89 % reduziert.

Tabelle 2: Gemessene Eisenkonzentrationen und die relative Korrosions-Inhibierung für Stahl von PWS in Abhängigkeit von der Konzentration.

| Konzentration PWS [mg/L] | Eisenkonzentration $C_{Fe,c}$ [mg/L] | $RKI_{Fe}$ [%] |
|--------------------------|--------------------------------------|----------------|
| 0 (Blindwert) | 36 | 0 |
| 10 | 32 | 11 |
| 20 | 28 | 22 |
| 30 | 3,0 | 92 |
| 40 | 3,1 | 91 |

Beispiel 2:

Korrosionsinhibierung von Stahl

Es wurden Mischungen von Phosphoweinsäure (PWS) (60%ige Lösung des Tetrakaliumsalzes) und einem weiteren Korrosionsinhibitor gemäß der Versuchsvorschrift von Beispiel 1 getestet. Die Summe der einzelnen Inhibitorkonzentrationen betrug stets 20 mg/L, wobei die Anteile der Inhibitoren variiert wurden.

Der Relative Synergieeffekt RS(M) einer Mischung ergibt sich aus der gemessenen Relativen Korrosionsinhibierung $RKI(M)_{Fe,gem}$ und der berechneten Relativen Korrosionsinhibierung $RKI(M)_{Fe,ber}$ gemäß nachfolgender Formel 3:

$$\text{Formel 3:} \quad RS(M) = RKI(M)_{Fe,gem} / RKI(M)_{Fe,ber} - 1.$$

Ist RS > 0 liegt eine synergistische Wirkung vor, ist RS < 0 eine antagonistische Wirkung.

Die berechnete Relative Korrosionsinhibierung $RKI(M)_{Fe,ber}$ ergibt sich aus dem gewichteten Mittel der gemessenen Relativen Korrosionsinhibierung $RKI(A)_{Fe,gem}$ und $RKI(B)_{Fe,gem}$ der beiden Einzelkomponenten A und B alleine gemäß nachfolgender Formel 4:

$$\text{Formel 4:} \quad RKI(M)_{Fe,ber} = c(A)/20 \cdot RKI(A)_{Fe,gem} + c(B)/20 \cdot RKI(B)_{Fe,gem}$$

Dabei stellen c(A) und c(B) die Konzentrationen der Komponenten A und B in der Mischung dar.

In Tabelle 3 sind die Ergebnisse zur Korrosionsinhibierung für Mischungen aus Phosphoweinsäure (PWS) (60%ige Lösung des Tetrakaliumsalzes) und Phosphonobutantricarbonsäure (50% Säure in Wasser) (PBTC) dargestellt. Es ergibt sich ein synergistischer Effekt für die Mischung aus Phosphoweinsäure und Phosphonobutantricarbonsäure im Verhältnis von 6:1 bis 1:6.

Tabelle 3: Ergebnisse zur Korrosionsinhibierung für Mischungen aus Phosphoweinsäure (PWS) und Phosphonobutantricarbonsäure (PBTC).

| Konzentration PWS | Konzentration PBTC | Verhält nis PWS/P BTC | Eisenkonzentration $C_{Fe,c}$ | $RKI_{Fe,gem}$ | $RKI_{Fe,ber}$ | RS(( M) |
|---|---|---|---|---|---|---|
| [mg/L] | [mg/L] | | [mg/L] | [%] | [%] | |
| 20 | 0 | | 28 | 22 | 22 | 0,0 |
| 17 | 3 | 5,7 : 1 | 23 | 36 | 21 | 0,8 |
| 13 | 7 | 1,9 : 1 | 15 | 58 | 18 | 2,2 |
| 10 | 10 | 1 : 1 | 19 | 47 | 17 | 1,8 |
| 7 | 13 | 1 : 1,9 | 25 | 31 | 15 | 1,0 |
| 3 | 17 | 1 : 5,7 | 25 | 31 | 13 | 1,4 |
| 0 | 20 | | 32 | 11 | 11 | 0,0 |

In Tabelle 4 sind die Ergebnisse zur Korrosionsinhibierung für Mischungen aus Phosphoweinsäure (PWS) (60%ige Lösung des Tetrakaliumsalzes) und Weinsäure (WS) dargestellt. Es ergibt sich ein synergistischer Effekt für die Mischung aus Phosphoweinsäure und Weinsäure im Verhältnis von 6:1 bis 1:6.

Tabelle 4: Ergebnisse zur Korrosionsinhibierung für Mischungen aus Phosphoweinsäure (PWS) und Weinsäure (WS).

| Konzentration PWS | Konzentration WS | Verhält nis PWS/W S | Eisenkonzentration $C_{Fe,c}$ | $RKI_{Fe,gem}$ | $RKI_{Fe,ber}$ | RS (M) |
|---|---|---|---|---|---|---|
| [mg/L] | [mg/L] | | [mg/L] | [%] | [%] | |
| 20 | 0 | | 28 | 22 | 22 | 0,0 |
| 17 | 3 | 5,7 : 1 | 12 | 68 | 32 | 1,1 |
| 13 | 7 | 1,9 : 1 | 3,2 | 91 | 46 | 1,0 |
| 10 | 10 | 1 : 1 | 3,3 | 91 | 56 | 0,6 |
| 7 | 13 | 1 : 1,9 | 3,0 | 92 | 66 | 0,4 |
| 3 | 17 | 1 : 5,7 | 3,3 | 91 | 79 | 0,2 |
| 0 | 20 | | 4,0 | 89 | 89 | 0,0 |

In Tabelle 5 sind die Ergebnisse zur Korrosionsinhibierung für Mischungen aus Phosphoweinsäure (PWS) (60%ige Lösung des Tetrakaliumsalzes) und Zitronensäure (60% in Wasser) (ZS) dargestellt. Es ergibt sich ein synergistischer Effekt für die Mischung aus Phosphoweinsäure und Zitronensäure im Verhältnis von 6:1 bis 1:6.

Tabelle 5: Ergebnisse zur Korrosionsinhibierung für Mischungen aus Phosphoweinsäure (PWS) und Zitronensäure (ZS).

| Konzentration PWS | Konzentration ZS | verhältnis PWS/ZS | Eisenkonzentration $C_{Fe,c}$ | $RKI_{Fe,gem}$ | $RKI_{Fe,ber}$ | RS (M) |
|---|---|---|---|---|---|---|
| [mg/L] | [mg/L] | | [mg/L] | [%] | [%] | |
| 20 | 0 | | 28 | 22 | 22 | 0,0 |
| 17 | 3 | 5,7 : 1 | 20 | 43 | 26 | 0,7 |
| 13 | 7 | 1,9 : 1 | 7,8 | 78 | 31 | 1,5 |
| 10 | 10 | 1 : 1 | 13 | 64 | 35 | 0,8 |
| 7 | 13 | 1 : 1,9 | 15 | 58 | 39 | 0,5 |
| 3 | 17 | 1 : 5,7 | 13 | 65 | 44 | 0,5 |
| 0 | 20 | | 19 | 48 | 48 | 0,0 |

Beispiel 2a:

Es wurde eine Mischung (MI) von 45% Phosphoweinsäure (PWS) (60%ige Lösung des Tetrakaliumsalzes), 12 %, Weinsäure und 8% Phosphorsäure in Wasser, mit Kalilauge auf einen pH Wert von 12,2 eingestellt und gemäß der Versuchsvorschrift von Beispiel 1 getestet.

In Tabelle 5a sind die Ergebnisse zur Korrosionsinhibierung der Mischung dargestellt. Bereits bei einer Konzentration von 30 mg/L wird eine relative Korrosionsinhibierung von über 90 % erzielt.

Tabelle 5a: Ergebnisse zur Korrosionsinhibierung für eine Mischung aus Phosphoweinsäure (PWS), Weinsäure und Phosphorsäure.

| Konzentration MI [mg/L] | Eisenkonzentration $C_{Fe,c}$ [mg/L] | $RKI_{Fe}$ [%] |
|---|---|---|
| 0 (Blindwert) | 36 | 0 |
| 10 | 20 | 44 |
| 20 | 17 | 54 |
| 30 | 3,0 | 92 |
| 40 | 2,6 | 93 |

Beispiel 3:

Korrosionsinhibierung von Messing

Die Versuche wurden nach dem im Beispiel 1 beschriebenen Verfahren unter Verwendung von Messing Coupons (CDA 443) durchgeführt und nach Abschluss des Versuches die Konzentrationen von Kupfer und Zink in dem Testwasser mittels Atomadsorptionsspektroskopie bestimmt.

Aus der gemessenen Kupfer- und Zinkkonzentration $C_{Cu,c}$ bzw. $C_{Zn,c}$ und der gemessenen Kupfer- und Zinkkonzentration ohne Inhibitorzusatz (Blindwert) $C_{Cu,0}$ bzw. $C_{Zn,0}$ ergibt sich die relative Korrosions-Inhibierung für Messing ($RKI_{Cu}$ [%]) nach Formel 5 und $RKI_{Zn}$ [%]) nach Formel 6:

$$\text{Formel 5:} \quad RKI_{Cu} = (1 - C_{Cu,c} / C_{Cu,0}) \times 100\,\%$$

$$\text{Formel 6:} \quad RKI_{Zn} = (1 - C_{Zn,c} / C_{Zn,0}) \times 100\,\%$$

In Tabelle 6 sind die gemessenen Kupfer- und Zinkkonzentrationen und die relative Korrosions-Inhibierung für Kupfer und Zink von PWS in Abhängigkeit von der Konzentration dargestellt. Bei einer Konzentration von 20 mg/L wird die Korrosion von Kupfer und Zink um 75 % beziehungsweise 87 % reduziert.

Tabelle 6: Gemessenen Kupfer- und Zinkkonzentrationen und die relative Korrosions-Inhibierung für Kupfer und Zink von PWS in Abhängigkeit von der Konzentration.

| Konzentration PWS [mg/L] | Kupferkonzentration $C_{Cu,c}$ [mg/L] | $RKI_{Cu}$ [%] | Zinkkonzentration $C_{Zn,c}$ [mg/L] | $RKI_{Zn}$ [%] |
|---|---|---|---|---|
| 0 (Blindwert) | 0,77 | 0 | 0,78 | 0 |
| 20 | 0,19 | 75 | 0,10 | 87 |
| 60 | 0,16 | 79 | 0,05 | 94 |

Beispiel 4:

Inhibierung von Calciumcarbonat-Ablagerungen

Das Beispiel 4 wurde nach einem Versuchsaufbau nach Figur 2 zur Bestimmung der Wirkung einer Substanz als Calciumcarbonat Scaleinhibitor durchgeführt.

Tabelle 7: Zusammensetzung des Testwassers.

| Parameter | Einheit | Wert |
|---|---|---|
| Calcium | $Mol/m^3$ | 5,4 |
| Magnesium | $Mol/m^3$ | 1,8 |
| Hydrogencarbonat | $Mol/m^3$ | 20 |
| Sulfat | $Mol/m^3$ | 1,8 |
| Chlorid | $Mol/m^3$ | 10,8 |
| Natrium | $Mol/m^3$ | 20 |
| pH | | 8,5 |

Nach einer Versuchsdauer von 2 Stunden wird das im Glasrückflusskühler verbliebene Wasser vorsichtig mit der Schlauchpumpe entfernt. Das an der Glaswandung abgeschiedene Calciumcarbonat wird mit Salzsäure gelöst. Die mit einem Becher aufgefangene Salzsäure wird auf ein definiertes Volumen (100 ml) mit vollentsalztem Wasser aufgefüllt und nach der Neutralisation die Calcium-Konzentration durch komplexometrische Titration (0,01783 Mol/L Natrium EDTA-Lösung, Hersteller Bernd Kraft GmbH, Artikel-Nr.: 01083.3000) bestimmt. Der Endpunkt der Titration wird durch den Farbumschlag des Indikators Calconcarbonsäure von rot-violett nach blau angezeigt.

Aus dem Verbrauch der Titrationslösung $V_c$ und dem Verbrauch der Titrationslösung ohne Inhibitorzusatz (Blindwert) $V_0$ ergibt sich die relative Calciumcarbonat-Inhibierung (RCI [%]) nach Formel 7:

$$\text{Formel 7:} \quad RCI = (1 - V_c/V_0) \times 100\ \%$$

In Tabelle 8 sind die Verbräuche der Titrationslösung und die relative Calciumcarbonat-Inhibierung von PWS (60%ige Lösung des Tetrakaliumsalzes) in Abhängigkeit von der Konzentration dargestellt. Bei einer Konzentration von 4 mg/L wird die Calciumcarbonat-Abscheidung nahezu vollständig und ab 6 mg/L vollständig verhindert.

Tabelle 8: Verbräuche der Titrationslösung und die relative Calciumcarbonat-Inhibierung von PWS in Abhängigkeit von der Konzentration.

| Konzentration PWS [mg/L] | Verbrauch $V_c$ [ml] | RCI [%] |
|---|---|---|
| 0 (Blindwert) | 11,8 | 0 |
| 2 | 6,2 | 48 |
| 4 | 0,7 | 94 |
| 6 | 0 | 100 |
| 8 | 0 | 100 |
| 10 | 0 | 100 |

Beispiel 5:

Bestimmung der Chlorstabiliät von PWS

Die Bestimmung der Chlorstabiliät von PWS wurde in Analogie zu handelsüblichen Phosphonsäuren bestimmt durch die partielle Umsetzung der organisch gebundenen Phosphats (org-$PO_4$ zu ortho-Phosphat. Hierzu wurde in den Testlösungen der gesamt- (ges-$PO_4$) und ortho-Phosphat Gehalt (o-$PO_4$) bestimmt. Das organisch gebundene Phosphat ergibt sich nach org-$PO_4$ = ges-$PO_4$ - o-$PO_4$.

Die Bestimmung von ges-$PO_4$ und o-$PO_4$ erfolgte mit dem Laborautomat Ganimede P von der Fa. Dr. Lange. Die Ganimede Analyseneinheit P ermöglicht die Messung von $PO_4$ als Gesamtphosphat oder ortho-Phosphat mittels eines photometrischen Verfahrens gemäß DIN EN 1189 von 12/96.

Die Bestimmung des Gesamtphosphats erfolgt nach Hochtemperaturaufschluss des organischen Phosphates zu ortho-Phosphat. Hierbei werden ca. 2 mL der Probe mit einem Aufschlussreagenz über 90 Sekunden bei 150 °C und 6 bar erhitzt. Zwei Sicherheitsstufen lassen einen eventuell entstehenden Überdruck bei 7 und 9 bar ab. Anschließend wird die Probe mit einer Luftkühlung auf 90 °C abgekühlt.

Automatisch wird die aufgeschlossene Lösung aus der Aufschlussküvette in die Analysenküvette gepumpt und die notwendigen Reagenzien (Farb- und Reduktionsreagenz) hinzugefügt. Hierbei kühlt die Probe weiter auf ca. 45 °C ab. Durch die erwärmte Probe verkürzt sich die Reaktionszeit zur Ausbildung des Phosphormolybdänblau; der Gesamtphosphat Gehalt wird dann photometrisch bei 880 nm bestimmt.

Für die Bestimmung des ortho-Phosphat Gehalts wird die Probe ohne Aufschluss direkt in die Analysenküvette gepumpt, mit den Reagenzien vermischt und photometrisch bei 880 nm vermessen.

2 L Düsseldorfer Trinkwasser werden in ein Becherglas gegeben. Mit der NaOCl-Lösung (0,013%) wird ein Hypochloritgehalt von 1 mg/L (angegeben als $Cl_2$) eingestellt. Anschließend wird der pH-Wert auf 8,5 eingestellt, der zu testende Rohstoff und 1 mg Br/L als Natriumbromid zugegeben. Der Gehalt an freiem Chlor und der pH-Wert werden alle 15 Minuten überprüft und bei Bedarf eingestellt.

Die Versuchsdauer beträgt insgesamt 4 Stunden. Direkt nach Versuchsbeginn und danach halbstündlich wird eine 50 mL Probe zur Bestimmung des g-$PO_4$ und o-$PO_4$ Gehalts entnommen. In den entnommenen Proben wird das Hypochlorit mit 1 - 2 mL Harnstoff-Lösung (4%) zerstört. Die Versuche wurden bei Raumtemperatur durchgeführt.

Die Chlorstabilität ($Cl_2St(t)$) ergibt sich aus dem prozentualen org-$PO_4$ Gehalt zum Versuchszeitpunkt (org-$PO_4(t)$) bezogen auf den org-$PO_4$ Gehalt zu Versuchsbeginn (org-$PO_4(0)$) nach: $Cl_2St(t) = (1- (org-PO_4(0)-org-PO_4(t))/org-PO_4(0))*100\%$.

Die Bestimmung der Chlorstabilität wurde an einer 60% Lösung des Tetrakaliumsalzes der PWS durchgeführt. Zum Vergleich sind die Daten für handelsübliche Phosphonsäuren bestimmt worden. Es zeigt sich, dass PWS eine deutlich höhere Chlorstabilität als 3 der 4 untersuchten Phosphonsäuren aufweist.

Tabelle 9: Chloridstabilitäten in Abhängigkeit von der Zeit von PWS im Vergleich zu handelsübliche Phosphonsäuren - alle Angaben in %, wenn nicht anders angegeben.

| Versuchdauer [h] | PWS, 20 mg/L | PBTC, 20 mg/L | ATMP, 10 mg/L | HEDP, 10 mg/L | HPA, 10 mg/L |
|---|---|---|---|---|---|
| org-PO4(0) | 2,6 mg/L | 3,5 mg/L | 4,6 mg/L | 5,5 mg/L | 5,5 mg/L |
| 0,05 | 91 | 95 | 87 | 85 | 70 |
| 0,5 | 90 | 93 | 74 | 67 | 39 |
| 1 | 81 | 94 | 68 | 71 | 27 |
| 1,5 | 80 | 93 | 62 | 50 | 19 |
| 2 | 80 | 90 | 60 | 38 | 14 |
| 2,5 | 80 | 93 | 52 | 29 | 9 |
| 3 | 81 | 93 | 53 | 21 | 6 |
| 3,5 | nicht bestimmt | 97 | 52 | 14 | 3 |
| 4 | 78 | 92 | 52 | 6 | 1 |
| PBTC = Phosphonobutantricarbonsäure 50%<br>ATMP = Aminotrimethylenphosphonsäure 50%<br>HEDP = Hydroxiethandiphosphonsäure 60%<br>HPA = Hydroxiphosphonoessigsäure 50% | | | | | |

**Patentansprüche**

1. Verwendung von Phosphoweinsäure und/oder deren Salze zur Behandlung von Wasser in wasserführenden Systemen.

2. Verwendung nach Anspruch 1, wobei Phosphoweinsäure in wasserführenden Systemen in einer Menge von 0,1 bis 10000 mg, bezogen auf einen Liter des wasserführenden Systems zugesetzt wird.

3. Verwendung nach einem der vorherigen Ansprüche, wobei das Wasser der wasserführenden Systeme eine Leitfähigkeit im Bereich von 1 bis 200000 $\mu$S/cm aufweist.

4. Verwendung nach einem der vorherigen Ansprüche, wobei die Phosphoweinsäure und/oder deren Salze in wasserführenden Systemen mit einer Calciumhärte im Bereich von 0 bis 30 mol, bezogen auf einem Kubikmeter Flüssigkeit des wasserführenden Systems, eingesetzt wird.

5. Verwendung nach einem der vorherigen Ansprüche in Form eines oder mehrerer Alkalimetallsalze und/oder eines oder mehrerer Ammoniumsalze.

6. Verwendung nach einem der vorherigen Ansprüche als Korrosionsinhibitor und/oder als Scaleinhibitor.

7. Verwendung nach einem der vorherigen Ansprüche, wobei man Phosphoweinsäure und/oder deren Salze als Bestandteil a) gemeinsam mit wenigstens einem weiteren Bestandteil b) und/oder c) einsetzt, wobei Bestandteil b) ausgewählt ist unter aliphatischen Di-, Tri- und Oligocarbonsäuren, die bis zu 6 Carbonsäure Gruppen enthalten, aliphatischen Monocarbonsäuren, die wenigstens eine Hydroxylgruppe aufweisen, Aminosäuren, deren Salze und deren Gemische, und Bestandteil c) ausgewählt ist unter anorganischen Polyphosphorsäure, Metapolyphosphorsäure und deren Salze und wasserlöslichen organischen Phosphonsäuren und deren Salze und deren Gemische.

8. Verwendung nach Anspruch 7, wobei die Zusammensetzung den Bestandteil b) umfasst und das Gewichtsverhältnis von dem Bestandteil a) zu dem Bestandteil b), jeweils gerechnet als Reinstoff, im Bereich von 1:20 bis 20:1 ist.

9. Verwendung nach einem der Ansprüche 7 oder 8, wobei der Bestandteil b) ausgewählt ist unter Weinsäure, Äpfelsäure, Milchsäure, Glykolsäure, Gluconsäure, Zitronensäure, Iso-Zitronensäure, Mandelsäure, Mevalonsäure, Tartronsäure, Hydroxialkansäure, Gallussäure, Salicylsäure, Hydroxibenzoesäure, Asparaginsäure, Alkandisäuren, ungesättigten Alkandisäuren, insbesondere Fumarsäure, Maleinsäure, Butantetracarbonsäure, Cyclohexanhexancarbonsäure, deren Salzen, Mischungen hiervon.

10. Verwendung nach Anspruch 9, wobei der Bestandteil b) ausgewählt ist unter Alkandisäuren mit der Formel COOH-(CH$_2$-)$_n$-COOH, wobei n im Bereich von 1 bis 14 ist.

11. Verwendung nach einem der Ansprüche 7 bis 10, umfassend einen Bestandteil c), wobei der Bestandteil c) ausgewählt ist unter Polyphosphorsäure, Metapolyphosphorsäure und deren Salzen.

12. Verwendung nach Anspruch 11, wobei der Bestandteil c) ausgewählt ist unter Polyphosphorsäuren mit der Formel $H_{n+2}P_nO_{3n+1}$, wobei n im Bereich von 1 bis 100 ist, und Metapolyphosphorsäuren mit der Formel $H_nP_nO_{3n}$, wobei n im Bereich von 3 bis 100 ist.

13. Verwendung nach einem der Ansprüche 7 bis 12, wobei die Zusammensetzung eine wässrige Lösung oder Dispersion ist.

14. Verwendung nach einem der vorherigen Ansprüche, wobei man Phosphoweinsäure in Kombination mit wenigstens einem Bestandteil, der ausgewählt ist unter Biodispergatoren, Bioziden, Korrosionsinhibitoren, Scaleinhibitoren und Dispergatoren, einsetzt.

15. Zusammensetzung umfassend Phosphoweinsäure und/oder deren Salze und eine oder mehrere Hydroxycarbonsäure(n) und/oder deren Salze.

**EP 3 105 366 B1**

**Claims**

1. The use of phosphotartaric acid and the salts thereof for the treatment of water in water-conducting systems.

2. The use as claimed in claim 1, wherein phosphotartaric acid is added to water-conducting systems in an amount of 0.1 to 10000 mg, based on one liter of the water-conducting system.

3. The use as claimed in either of the preceding claims, wherein the water of the water-conducting system has a conductivity in the range of 1 to 200 000 $\mu$S/cm.

4. The use as claimed in any one of the preceding claims, wherein the phosphotartaric acid and/or the salts thereof is used in water-conducting systems having a calcium hardness in the range of 0 to 30 mol, based on one cubic meter of liquid of the water-conducting system.

5. The use as claimed in any one of the preceding claims in the form of one or more alkali metal salts and/or one or more ammonium salts.

6. The use as claimed in any one of the preceding claims as corrosion inhibitor and/or as scale inhibitor.

7. The use as claimed in any one of the preceding claims, wherein phosphotartaric acid and/or the salts thereof is used as constituent a) together with at least one further constituent b) and/or c), wherein constituent b) is selected from aliphatic di-, tri- and oligocarboxylic acids comprising up to 6 carboxylic acid groups, aliphatic monocarboxylic acids having at least one hydroxyl group, amino acids, salts thereof and mixtures thereof, and constituent c) is selected from inorganic polyphosphoric acid, meta-polyphosphoric acid and salts thereof and water-soluble organic phosphonic acids and salts thereof and mixtures thereof.

8. The use as claimed in claim 7, wherein the composition comprises the constituent b) and the weight ratio of the constituent a) to the constituent b), calculated in each case as pure substance, is in the range of 1:20 to 20:1.

9. The use as claimed in either of claims 7 and 8, wherein the constituent b) is selected from tartaric acid, malic acid, lactic acid, glycolic acid, gluconic acid, citric acid, isocitric acid, mandelic acid, mevalonic acid, tartronic acid, hydroxyalkanoic acid, gallic acid, salicylic acid, hydroxybenzoic acid, aspartic acid, alkanedioic acids, unsaturated alkanedioic acids, fumaric acid, maleic acid, butanetetracarboxylic acid, cyclohexanehexanecarboxylic acid, salts thereof, mixtures thereof.

10. The use as claimed in claim 9, wherein the constituent b) is selected from alkanedioic acids having the formula COOH-$(CH_2)_n$-COOH, wherein n is in the range from 1 to 14.

11. The use as claimed in any one of claims 7 to 10, comprising a consituent c), wherein the constituent c) is selected from polyphosphoric acid, metapolyphosphoric acid and salts thereof.

12. The use as claimed in claim 11, wherein the constituent c) is selected from polyphosphoric acids having the formula $H_{n+2}P_nO_{3n+1}$, wherein n is in the range from 1 to 100, and meta-polyphosphoric acids having the formula $H_nP_nO_{3n}$, wherein n is in the range from 3 to 100.

13. The use as claimed in any one of claims 7 to 12, wherein the composition is an aqueous solution or dispersion.

14. The use as claimed in any one of the preceding claims, wherein phosphotartaric acid is used in combination with at least one constituent selected from the group consisting of biodispersants, biocides, corrosion inhibitors, scale inhibitors and dispersants.

15. A composition comprising phosphotartaric acid and/or salts thereof and one or more hydroxycarboxylic acid(s) and/or salts thereof.

**Revendications**

1. Utilisation d'acide phosphotartrique et/ou ses sels pour le traitement d'eau dans des systèmes de conduction d'eau.

EP 3 105 366 B1

**2.** Utilisation selon la revendication 1, dans laquelle l'acide phosphotartrique est ajouté dans des systèmes de conduction d'eau en une quantité de 0,1 à 10 000 mg, par rapport à un litre du système de conduction d'eau.

**3.** Utilisation selon l'une quelconque des revendications précédentes, dans laquelle l'eau des systèmes de conduction d'eau présente une conductivité dans la plage allant de 1 à 200 000 $\mu$S/cm.

**4.** Utilisation selon l'une quelconque des revendications précédentes, dans laquelle l'acide phosphotartrique et/ou ses sels sont utilisés dans des systèmes de conduction d'eau présentant une dureté due au calcium dans la plage allant de 0 à 30 moles, par rapport à un mètre cube de liquide du système de conduction d'eau.

**5.** Utilisation selon l'une quelconque des revendications précédentes sous la forme d'un ou de plusieurs sels de métaux alcalins et/ou d'un ou de plusieurs sels d'ammonium.

**6.** Utilisation selon l'une quelconque des revendications précédentes en tant qu'inhibiteur de corrosion et/ou inhibiteur d'entartrage.

**7.** Utilisation selon l'une quelconque des revendications précédentes, dans laquelle l'acide phosphotartrique et/ou ses sels sont utilisés en tant que constituant a) conjointement avec au moins un autre constituant b) et/ou c), le constituant b) étant choisi parmi les acides di-, tri- et oligocarboxyliques aliphatiques, qui contiennent jusqu'à 6 groupes acide carboxylique, les acides monocarboxyliques aliphatiques, qui comprennent au moins un groupe hydroxyle, les acides aminés, leurs sels et leurs mélanges, et
le constituant c) étant choisi parmi l'acide polyphosphorique inorganique, l'acide métapolyphosphorique et ses sels et les acides phosphoniques organiques solubles dans l'eau et leurs sels et leurs mélanges.

**8.** Utilisation selon la revendication 7, dans laquelle la composition comprend le constituant b) et le rapport en poids entre le constituant a) et le constituant b), chacun calculés en tant que substance pure, est dans la plage allant de 1:20 à 20:1.

**9.** Utilisation selon l'une quelconque des revendications 7 ou 8, dans laquelle le constituant b) est choisi parmi l'acide tartrique, l'acide malique, l'acide lactique, l'acide glycolique, l'acide gluconique, l'acide citrique, l'acide isocitrique, l'acide mandélique, l'acide mévalonique, l'acide tartronique, l'acide hydroxyalcanoïque, l'acide gallique, l'acide salicylique, l'acide hydroxybenzoïque, l'acide asparaginique, les acides alcanedioïques, les acides alcanedioïques insaturés, notamment l'acide fumarique, l'acide maléique, l'acide butane-tétracarboxylique, l'acide cyclohexane-hexane-carboxylique, leurs sels, leurs mélanges.

**10.** Utilisation selon la revendication 9, dans laquelle le constituant b) est choisi parmi les acides alcanedioïques de formule $COOH\text{-}(CH_2\text{-})_n\text{-}COOH$, n étant dans la plage allant de 1 à 14.

**11.** Utilisation selon l'une quelconque des revendications 7 à 10, comprenant un constituant c), le constituant c) étant choisi parmi l'acide polyphosphorique, l'acide métapolyphosphorique et leurs sels.

**12.** Utilisation selon la revendication 11, dans laquelle le constituant c) est choisi parmi les acides polyphosphoriques de formule $H_{n+2}P_nO_{3n+1}$, n étant dans la plage allant de 1 à 100, et les acides métapolyphosphoriques de formule $H_nP_nO_{3n}$, n étant dans la plage allant de 3 à 100.

**13.** Utilisation selon l'une quelconque des revendications 7 à 12, dans laquelle la composition est une solution ou dispersion aqueuse.

**14.** Utilisation selon l'une quelconque des revendications précédentes, dans laquelle l'acide phosphotartrique est utilisé en combinaison avec au moins un constituant qui est choisi parmi les biodispersants, les biocides, les inhibiteurs de corrosion, les inhibiteurs d'entartrage et les dispersants.

**15.** Composition comprenant de l'acide phosphotartrique et/ou ses sels et un ou plusieurs acides hydroxycarboxyliques et/ou leurs sels.

15

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4120655 A

**In der Beschreibung aufgeführte Nicht-Patentliteratur**

- **COLIN FRAYNE.** Cooling Water Treatment. Chemical Publishing Co, 1999
- **MARIE J. ALTON.** Chemical Treatment for cooling water. The Fairmont Press, 1998
- **H.-D. HELD, H. ; G. SCHNELL.** Kühlwasser. Vulkan-Verlag, 1994
- Korrosion in Kühlkreisläufen. Verlag Irene Kuron, 1990
- **H.,G. SCHNELL ; W.-D. SCHNELL.** Kühlwasser. Vulkan-Verlag, 2012
- Phosphor-d(+)-weinsäure, Aus dem Chemischen Universitäts-Laboratorium München. **FEODOR LYNEN ; HANS BAYER.** Biochemische Abteilung und dem Laboratorium. 02. April 1952
- *Chemische Berichte Jahrgang,* 1985, 905-912
- **C. NEUBERG ; W. SCHUCHARDT.** Über die Synthese der Phospho-d-weinsäure und ihre phosphatatische Spaltung. *Aus dem Kaiser Wilhelm-Institut für Biochemie in Berlin-Dahlem,* 39-47
- **F. LYNEN ; H. BAYER.** *Chemische Berichte,* 1952, vol. 85, 905-912